# EUROPÄISCHE PATENTSCHRIFT

(11) **EP 3 152 385 B1**
(45) Veröffentlichungstag und Bekanntmachung des Hinweises auf die Patenterteilung: **06.03.2024**
(21) Anmeldenummer: 15726125.6
(22) Anmeldetag: 29.05.2015
(51) Int. Cl.: E21B 19/16

(54) **VERFAHREN ZUM BETRIEB EINES ZANGENSYSTEMS ZUR VERWENDUNG AUF EINER BOHRANLAGE UND KORRESPONDIERENDES ZANGENSYSTEM, COMPUTERPROGRAMM ZUR IMPLEMENTIERUNG DES VERFAHRENS UND BOHRANLAGE MIT EINEM ZANGENSYSTEM**
METHOD FOR OPERATING A TONGS SYSTEM FOR USE ON A RIG AND CORRESPONDING TONGS SYSTEM, COMPUTER PROGRAM FOR IMPLEMENTING THE METHOD AND RIG COMPRISING A TONGS SYSTEM
PROCÉDÉ POUR FAIRE FONCTIONNER UN SYSTÈME DE PINCES DESTINÉ À ÊTRE UTILISÉ SUR UNE INSTALLATION DE FORAGE, SYSTÈME DE PINCES CORRESPONDANT, PROGRAMME INFORMATIQUE DE MISE EN UVRE DE CE PROCÉDÉ ET INSTALLATION DE FORAGE ÉQUIPÉE D'UN SYSTÈME DE PINCES

(30) Priorität: 06.06.2014 DE 102014210860
(43) Veröffentlichungstag der Anmeldung: 12.04.2017
(73) Patentinhaber: Bentec GmbH Drilling & Oilfield Systems, 48455 Bad Bentheim (DE)
(72) Erfinder: AALDERINK, Jan, 48455 Bad Bentheim (DE); REUTER, André, 83026 Rosenheim (DE); CORDES, Malte, 48429 Rheine (DE)
(74) Vertreter: Werner & ten Brink
(86) Internationale Anmeldenummer: PCT/EP2015/061924
(87) Internationale Veröffentlichungsnummer: WO 2015/185444

(56) Entgegenhaltungen:
- WO-A1-03/095150
- GB-A- 2 478 073
- US-A1- 2009 217 788

## Beschreibung

Die Erfindung betrifft zuvorderst ein Verfahren zum Betrieb eines zur Verwendung auf einer Bohranlage für Tiefbohrungen, zum Beispiel zum Abteufen von Bohrungen auf Kohlenwasserstoff-Lagerstätten zur Erdöl- und Erdgasexploration oder zum Erschließen von Geothermie, bestimmten Zangensystems, das in der Fachterminologie oftmals auch "Floorhand" oder "Iron Roughneck" genannt wird und auch als automatische Gestängezange bezeichnet werden kann. In der US 2007/ 068669 A1 ist ein solches Zangensystem beschrieben. Die Erfindung betrifft auch ein zur Ausführung des Verfahrens und zur Verwendung nach dem Verfahren bestimmtes Zangensystem.

Ein gattungsgemäßes Zangensystem ist beim Ein- und Ausbauen des Bohrgestänges zum Verbinden zweier Bohrgestängeelemente oder zum Trennen zweier Bohrgestängeelemente, insbesondere zum Verbinden eines Bohrgestängeelements mit dem Bohrstrang bzw. zum Lösen eines Bohrgestängeelements vom Bohrstrang, vorgesehen. Dafür wird das Zangensystem mittels eines beweglichen Arms oder dergleichen in einen Bereich über dem Bohrloch oder einen Bereich über dem sogenannten "Mouse Hole" bewegt. Dort erfolgt ein Verbinden eines Bohrgestängeelements mit einem ortsfesten Bohrgestängeelement durch ein anfängliches Verbinden der Gewinde der beiden Bohrgestängeelemente ("spinning"/ "Spinnen") und ein anschließendes Festziehen der Gewindeverbindung ("torquing"/"Torquen") oder ein Trennen eines Bohrgestängeelements von einem ortsfesten Bohrgestängeelement. Das ortsfeste Bohrgestängeelement ist zum Beispiel als Bestandteil des Bohrstrangs oder aufgrund der Platzierung im mouse hole ortsfest. Im Interesse einer besseren Lesbarkeit - aber ohne Verzicht auf eine weitergehende Allgemeingültigkeit - wird die nachfolgende Beschreibung anhand eines als Bestandteil des Bohrstrangs ortsfesten Bohrgestängeelements und einer Verwendung des Zangensystems über dem Bohrloch fortgesetzt. Die Beschreibung gilt gleichermaßen für ein Bohrgestängeelement, dessen Ortsfestigkeit sich aufgrund von dessen Platzierung im mouse hole ergibt und eine Anwendung des Zangensystems über dem mouse hole ist entsprechend bei jeder Erwähnung einer Anwendung des Zangensystems über dem Bohrloch mitzulesen. Grundsätzlich ist ein Zangensystem der hier vorgeschlagenen Art auch an anderen Stellen einer Bohranlage verwendbar und allgemein für jede Verwendung beim Verbinden oder Trennen einer Gewindeverbindung zweier Elemente mit einem zumindest stückweise runden Querschnitt geeignet.

Mittels einer von dem Zangensystem umfassten Unterzange erfolgt in an sich bekannter Art und Weise zunächst eine Fixierung des Zangensystems am ortsfesten Bohrgestängeelement. Mittels einer relativ zur Unterzange beweglichen Oberzange erfolgt sodann - in ebenfalls an sich bekannter Art und Weise - entweder das Verbinden eines weiteren Bohrgestängeelements mit dem ortsfesten Bohrgestängeelement oder das Lösen eines Bohrgestängeelements vom ortsfesten Bohrgestängeelement.

Speziell beim Verbinden eines weiteren Bohrgestängeelements mit dem ortsfesten Bohrgestängeelement ist das Erreichen und das Einhalten eines vorgegebenen oder vorgebbaren Anzugsmoments von Bedeutung. Vom korrekten Anzugsmoment hängt die Belastbarkeit des Bohrstrangs beim Bohren ab. Die Einhaltung eines vorgegebenen oder vorgebbaren Anzugsmoments ist allerdings dann nicht trivial, wenn ein Drehmoment, welches sich mittels einer Antriebseinheit ausüben lässt, während des Verbindens oder Trennens zweier Bohrgestängeelemente variiert.

Aus der US 6,752,044 B2 ist ein Zangensystem bekannt, bei dem zumindest eine Zange mittels eines Aktors in Form eines Hydraulik- oder Pneumatikzylinders gedreht wird, um Bohrgestängeelemente zu verbinden oder zu lösen. Zum Erhalt eines jeweils notwendigen Drehmoments besteht die Möglichkeit, den Aktor an unterschiedlichen Positionen eines Hebels zu fixieren. Je nach gewählter Position ergeben sich eine Länge eines Hebelarms und ein damit korreliertes Drehmoment zum Verbinden oder Trennen von Bohrgestängeelementen. Aus der US 2014/0116687 A1 ist ein Zangensystem bekannt, bei dem zumindest eine Zange mittels eines an einem Ring angreifenden Motors gedreht wird. Der Radius des Rings kann als wirksame Länge eines Hebelarms aufgefasst werden. Diese ändert sich beim Betrieb nicht. Folglich ist auch ein mittels des Motors und des Rings aufbringbares Drehmoment während des Verbindens oder Trennens zweier Bohrgestängeelemente konstant. Auch bei der EP 0 138 472 A1 wird mittels eines Drehtisches ein Bohrgestängeelement relativ zu einem drehfest fixierten Bohrgestängeelement bewegt. Beim Antrieb des Drehtisches ist ebenfalls das während des Verbindens oder Trennens zweier Bohrgestängeelemente aufbringbare Drehmoment konstant.

Aus der GB 2 478 073 A ist ein Verfahren zum Verbinden von Bohrgestängeelementen mittels eines Topdrive bekannt, wobei ein jeweils aufgebrachtes Moment mittels eines Kraftaufnehmers (strain gage) direkt erfasst wird. Bei der US 2009/217788 A1 wird als Maß für ein aufgebrachtes Moment der Druck in einem Hydraulikzylinder erfasst.

Eine Aufgabe der vorliegenden Erfindung besteht darin, ein Verfahren zum Betrieb eines Zangensystems der eingangs genannten Art anzugeben, mittels dessen sich das Erreichen und das Einhalten eines vorgegebenen oder vorgebbaren Anzugsmoments sicher und effizient auch dann erreichen lässt, wenn ein Drehmoment, welches sich während des Verbindens oder Trennens zweier Bohrgestängeelemente ausüben lässt, nicht konstant ist. Eine weitere Aufgabe der Erfindung besteht darin, ein zur Ausführung des Verfahrens geeignetes Zangensystem anzugeben.

Die oben zuerst genannte Aufgabe wird erfindungsgemäß mit einem Verfahren zum Betrieb eines Zangensystems der eingangs genannten Art mit den Merkmalen des Anspruchs 1 gelöst. Dazu ist bei einem Verfahren zum Betrieb eines zum Verbinden eines Bohrgestängeelements mit einem ortsfesten Bohrgestängeelement bestimmten Zangensystems, also eines Zangensystems, das eine Unterzange und eine mittels einer Antriebseinheit relativ zur Unterzange rotatorisch bewegliche Oberzange umfasst, Folgendes vorgesehen: Das Zangensystem umfasst ein Wegmesssystem oder dem Zangensystem ist ein Wegmesssystem zugeordnet. Das Zangensystem umfasst des Weiteren eine Steuereinheit oder dem Zangensystem ist eine Steuereinheit zugeordnet. Mittels des Wegmesssystems ist eine Lage der Oberzange relativ zur Unterzange mittelbar oder unmittelbar erfassbar und im Betrieb wird mittels des Wegmesssystems eine solche Lage erfasst. Mittels der Steuereinheit wird kontinuierlich oder regelmäßig und in Abhängigkeit von der erfassten Lage ein jeweils beim Verbinden der Bohrgestängeelemente wirkendes Anzugsmoment ermittelt und mit einem vorgegebenen oder vorgebbaren Sollanzugsmoment verglichen. Das Verbinden der beiden Bohrgestängeelemente wird automatisch mittels der Steuereinheit beendet, wenn das ermittelte Anzugsmoment das Sollanzugsmoment erreicht oder überschreitet.

Der Vorteil des hier vorgeschlagenen Konzepts besteht vor allem darin, dass die Gewindeabschnitte der beiden Bohrgestängeelemente mit einem definierten Anzugsmoment verbunden werden und dass gewährleistet ist, dass einerseits das Anzugsmoment sicher erreicht wird, also eine damit einhergehende Festigkeit der Gewindeverbindung gegeben ist, und dass andererseits das Anzugsmoment auch nicht überschritten oder zumindest nicht nennenswert überschritten wird, so dass sich kein unnötiger Verschleiß der Gewindeabschnitte der beiden Bohrgestängeelemente ergibt.

Des Weiteren besteht der Vorteil der hier vorgeschlagenen Neuerung darin, dass das definierte Anzugsmoment erreicht wird, obwohl ein Drehmoment, welches sich mittels einer Antriebseinheit während des Verbindens zweier Bohrgestängeelemente ausüben lässt, variiert. Dafür wird in Abhängigkeit von der Lage der Oberzange relativ zur Unterzange das beim Verbinden der beiden Bohrgestängeelemente jeweils wirkende Anzugsmoment ermittelt und dieses mit dem zu erreichenden, definierten Anzugsmoment verglichen. Eine solche Ermittlung eines jeweils wirkenden Anzugsmoments und solche Vergleiche sind bei den Verfahren gemäß der US 2014/0116687 A und der EP 0 138 472 B nicht notwendig, weil dort das aufbringbare Anzugsmoment unabhängig von einer Lage der jeweiligen Zange ist und damit nicht variiert.

Vorteilhafte Ausgestaltungen der Erfindung sind Gegenstand der Unteransprüche. Dabei verwendete Rückbeziehungen weisen auf die weitere Ausbildung des Gegenstands des Hauptanspruches durch die Merkmale des jeweiligen Unteranspruches hin.

Bei einer Ausführungsform des Verfahrens wird das Anzugsmoment mittels der Steuereinheit automatisch in Abhängigkeit von der erfassten Lage sowie in Abhängigkeit von einem Maß für eine von der Antriebseinheit ausgeübte Kraft ermittelt. Das Maß für die von der Antriebseinheit ausgeübte Kraft wird dabei in Bezug auf eine zum Drehen der Oberzange bestimmte Antriebseinheit aufgenommen, zum Beispiel indem bei der Antriebseinheit ein als Maß für die ausgeübte Kraft in Frage kommender Messwert aufgenommen wird. Bei einem als Antriebseinheit fungierenden Hydraulikzylinder wird als Maß für die mittels der Antriebseinheit ausgeübte Kraft mittels eines dem Hydraulikzylinder zugeordneten Drucksensors ein beim Drehen der Oberzange im Hydraulikzylinder wirkender Druck erfasst.

Bei einer weiteren Ausführungsform des Verfahrens wird die Oberzange beim Beginn des Verbindens der beiden Bohrgestängeelemente mit einer (hohen) Anfangsgeschwindigkeit gedreht und die Geschwindigkeit, mit der die Oberzange gedreht wird, wird ausgehend von der Anfangsgeschwindigkeit in Abhängigkeit von einem sich beim Verbinden der beiden Bohrgestängeelemente aufbauenden Gegenmoment reduziert, insbesondere kontinuierlich reduziert oder stufenweise reduziert. Dies führt zu einem besonders schnellen Verbinden der beiden Bohrgestängeelemente, indem die Oberzange zunächst mit der hohen Anfangsgeschwindigkeit gedreht wird und die Geschwindigkeit erst dann reduziert wird, wenn die Gewindeverbindung fest wird oder beginnt, fest zu werden. Im Vergleich zu einer ansonsten üblichen konstanten Drehgeschwindigkeit der Oberzange relativ zur Unterzange lässt sich auf diese Weise die zum Verbinden zweier Bohrgestängeelemente benötigte Zeit deutlich reduzieren. Beim sukzessiven Einbau einer Vielzahl von Bohrgestängeelementen multipliziert sich der Zeitgewinn auf einen in Abhängigkeit von der Gesamtlänge des resultierenden Bohrstrangs durchaus nennenswerten Betrag. Zudem erlaubt die Reduzierung der Geschwindigkeit in Abhängigkeit vom Gegenmoment das besonders genaue Erreichen des vorgegebenen Sollanzugsmoments.

Bei einer speziellen Ausführungsform eines solchen Verfahrens, bei dem die Geschwindigkeit ausgehend von der Anfangsgeschwindigkeit in Abhängigkeit von dem Gegenmoment reduziert wird und bei dem als Antriebseinheit zum Drehen der Oberzange ein Hydraulikzylinder fungiert, wird als Maß für das sich beim Verbinden der beiden Bohrgestängeelemente aufbauende Gegenmoment der beim Drehen der Oberzange im Hydraulikzylinder wirkende Druck verwendet. Dieser Druck ist mit einer geeigneten Sensorik, zum Beispiel einer Druckmessdose oder dergleichen, vergleichsweise einfach erfassbar. Mit einem elektronisch verarbeitbaren Messwert für diesen Druck und der aufgrund der bekannten Dimensionen des Hydraulikzylinders ebenfalls bekannten Kolben- oder Ringfläche im Hydraulikzylinder lässt sich die jeweils wirkende Kraft unmittelbar als Produkt aus dem Druckmesswert und der mit dem Druck beaufschlagten Fläche ermitteln. Das Gegenmoment ergibt sich dann als ebenfalls mittels der Steuereinheit ermittelbares Produkt aus der jeweils wirkenden Kraft und einem in Abhängigkeit von der erfassten Lage der Oberzange relativ zur Unterzange ermittelten wirksamen Hebelarm.

Bei einer weiteren Ausführungsform des Verfahrens der hier und im Folgenden beschriebenen Art, das neben dem Verbinden zweier Bohrgestängeelemente auch zum Lösen eines Bohrgestängeelements von einem ortsfesten Bohrgestängeelement vorgesehen ist, wird anhand einer vom Wegmesssystem erfassten jeweiligen Lage der Oberzange relativ zur Unterzange die Oberzange vor dem Beginn des Lösens der Verbindung der beiden Bohrgestängeelemente in eine Position verfahren, in welcher ein maximales Drehmoment ausgeübt werden kann. Die mittels des Wegmesssystems erfassbare Lage der Oberzange relativ zur Unterzange wird auf diese Weise nicht nur dafür verwendet, um das Anzugsmoment beim Verbinden zweier Bohrgestängeelemente auf das Sollanzugsmoment zu begrenzen und dieses sicher zu erreichen, sondern auch dafür, die Oberzange beim Lösen der Gewindeverbindung zweier Bohrgestängeelemente optimal zu positionieren.

Das Verfahren und einzelne Ausführungsformen des Verfahrens werden mittels einer Steuereinheit und einem von der Steuereinheit, nämlich einem von der Steuereinheit umfassten Mikroprozessor oder dergleichen, ausgeführten Steuerprogramm umgesetzt. Die oben genannte Aufgabe wird damit auch mit einer solchen Steuereinheit und einer der Steuereinheit zugeordneten Aktorik und Sensorik gelöst, nämlich zum Beispiel einem dem Hydraulikzylinder vorgeschalteten Steuerblock und einer dem Hydraulikzylinder zugeordneten Druckmessdose. Die Erfindung ist insoweit zumindest teilweise in Software implementiert. Die Erfindung ist damit einerseits auch ein Computerprogramm in Form des von der Steuereinheit ausgeführten Steuerprogramms mit durch einen Computer ausführbaren Programmcodeanweisungen und andererseits ein Speichermedium mit einem derartigen Computerprogramm, also ein Computerprogrammprodukt mit Programmcodemitteln, sowie schließlich auch eine Steuereinheit, in deren Speicher als Mittel zur Durchführung des Verfahrens und seiner Ausgestaltungen ein solches Computerprogramm geladen ist. Soweit die oben genannte Aufgabe durch ein zur Ausführung des Verfahrens und einzelner Ausgestaltungen des Verfahrens bestimmtes und eingerichtetes Zangensystem gelöst wird, ist die Steuereinheit mit dem in den Speicher der Steuereinheit geladenen Steuerprogramm ein von dem Zangensystem umfasstes oder dem Zangensystem zugeordnetes Mittel zur Ausführung des Verfahrens.

Bei einer Ausführungsform des Zangensystems ist das Wegmesssystem einer zum Drehen der Oberzange relativ zur Unterzange vorgesehenen Antriebseinheit zugeordnet, zum Beispiel einem als Antriebseinheit fungierenden Hydraulikzylinder. Als Wegmesssystem oder Sensorik eines solchen Wegmesssystems kommt zum Beispiel ein Inkrementalgeber oder dergleichen in Betracht. Grundsätzlich kommt alternativ oder zusätzlich auch in Betracht, das Wegmesssystem der Unterzange oder der Oberzange zuzuordnen und die Lage, insbesondere die Rotationslage, der Oberzange relativ zur Unterzange direkt zu ermitteln. Die Zuordnung des Wegmesssystems zur Antriebseinheit wird jedoch als vorteilhaft angesehen, weil in diesem Bereich - anders als bei einer Zuordnung des Wegmesssystems zur Ober- oder Unterzange - mit einem geringeren Verschmutzungs- und Beschädigungsrisiko gerechnet werden kann.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen. Das Ausführungsbeispiel ist nicht als Einschränkung der Erfindung zu verstehen.

Es zeigen
- Fig. 1, Fig. 2 und Fig. 3: eine Ausführungsform eines gegenständlichen Zangensystems zum Verbinden und zum Trennen zweier Bohrgestängeelemente,
- Fig. 4: Momentaufnahmen beim Verbinden zweier Bohrgestängeelemente,
- Fig. 5: Momentaufnahmen beim Betrieb des Zangensystems,
- Fig. 6: und
- Fig. 7: das Zangensystem bzw. Teile des Zangensystems zusammen mit einer zur Steuerung des Zangensystems bestimmten Steuereinheit sowie
- Fig. 8: eine Abhängigkeit einer von der Steuereinheit generierten Stellgröße von einem sich beim Betrieb des Zangensystems einstellenden Druck.

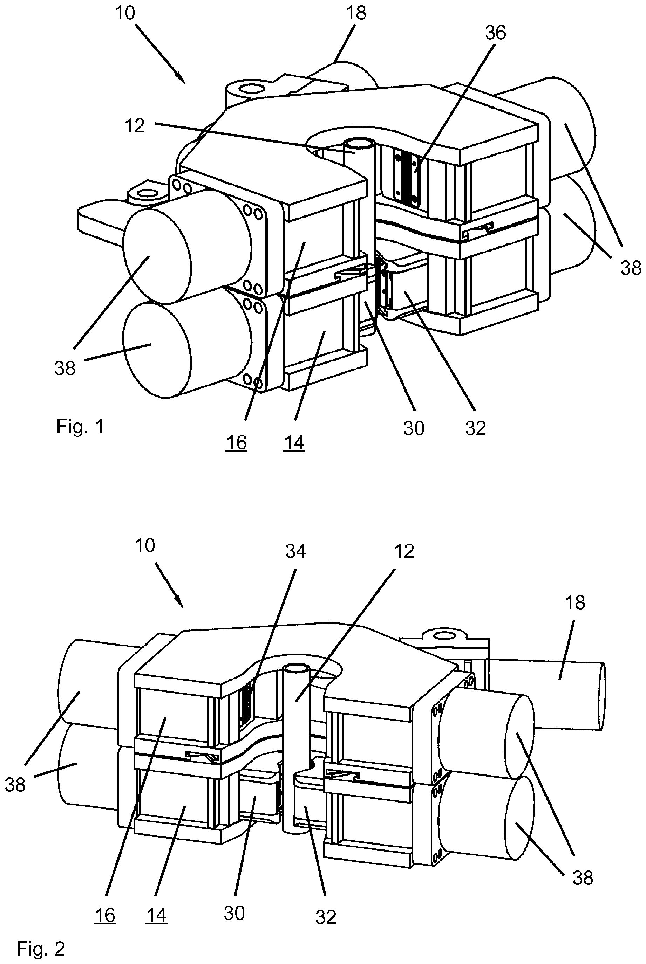

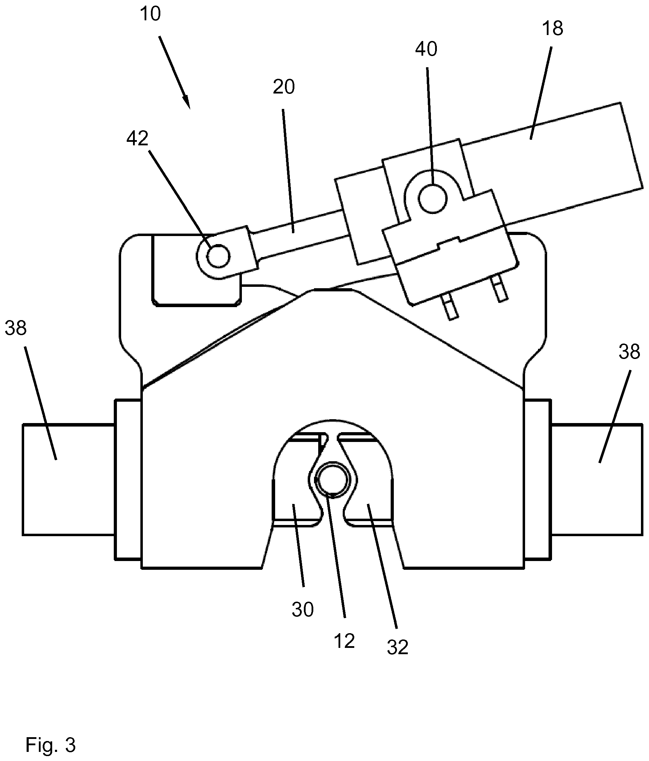

Die Darstellungen in Figur 1 und Figur 2 zeigen aus unterschiedlichen Blickrichtungen isometrische Ansichten einer Ausführungsform eines gegenständlichen Zangensystems 10, das zur Verwendung auf dem sogenannten Drillfloor einer selbst nicht dargestellten und zum Abteufen von Bohrungen auf Kohlenwasserstoff-Lagerstätten zur Erdöl- und Erdgasexploration oder zum Erschließen von Geothermie bestimmten - an sich bekannten - Bohranlage vorgesehen ist. Die Darstellung in Figur 3 zeigt das Zangensystem 10 gemäß Figur 1 und Figur 2 in einer Draufsicht.

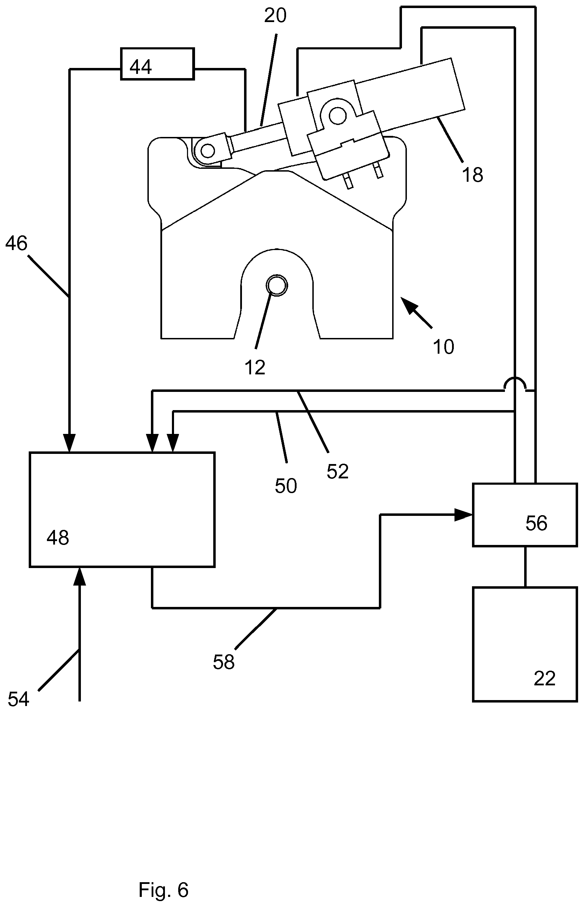

Das Zangensystem 10 umfasst eine Unterzange 14 und eine Oberzange 16. Die beiden Zangen 14, 16 sind mittels einer hier als Hydraulikzylinder gezeigten Antriebseinheit 18 relativ zueinander rotatorisch beweglich, so dass mittels des Zangensystems 10 ein Bohrgestängeelement 12 vom Bohrstrang gelöst werden oder ein Bohrgestängeelement 12 mit dem Bohrstrang verbunden werden kann. Dazu ist die Antriebseinheit 18 drehfest mit der Unterzange 14 verbunden und eine mit der Antriebseinheit 18 bewegliche Kolbenstange 20 (Fig. 3) greift an der Oberzange 16 an. Ein Einfahren und ein Ausfahren der Kolbenstange 20 durch Druckbeaufschlagung des Kolbens der Kolbenstange 20 mittels eines Hydraulikaggregats 22 (Fig. 6) führt entsprechend zu einer Drehung der Oberzange 16 relativ zur Unterzange 14.

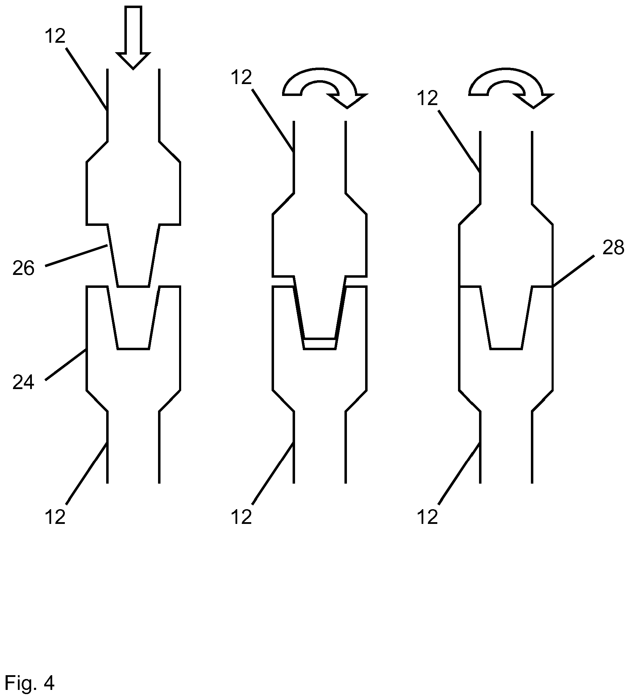

Das Zangensystem 10 ist Teil einer in der üblichen Fachterminologie zum Beispiel als "Floorhand" oder "Iron Roughneck" bezeichneten Vorrichtung. Eine solche Vorrichtung insgesamt und speziell das Zangensystem 10 dienen beim Ein- und Ausbauen von Bohrgestängeelementen 12 unter anderem zum Verschrauben eines Bohrgestängeelements 12 mit dem Bohrstrang bzw. zum Lösen eines Bohrgestängeelements 12 vom Bohrstrang. Die Bohrgestängeelemente 12 werden beim Einbau in an sich bekannter Art und Weise durch Verschrauben verbunden, wie dies mittels der Darstellungen in Figur 4 schematisch vereinfacht gezeigt ist. Dargestellt sind jeweils ein oberer Abschnitt eines ortsfesten Bohrgestängeelements 12 sowie ein unterer Abschnitt eines damit zu verbindenden weiteren Bohrgestängeelements 12. Von links nach rechts ist gezeigt, dass die beiden Bohrgestängeelemente 12 zunächst axial fluchtend zueinander positioniert werden (linke Darstellung), dass sodann - mittels einer üblicherweise als "Spinner" bezeichneten und mit dem Zangensystem 10 kombinierten Vorrichtung - ein anfängliches Verbinden der Gewinde der beiden Bohrgestängeelemente 12 erfolgt (mittlere Darstellung) und schließlich - mittels des in Figur 3 nicht gezeigten Zangensystems 10 - die Gewindeverbindung festgezogen wird (rechte Darstellung).

Jedes Bohrgestängeelement 12 weist dafür in an sich bekannter Art und Weise an einem Ende eine in der Fachterminologie auch als "Box" bezeichnete Muffe 24 mit einem Innengewinde und am anderen Ende einen in eine solche Muffe 24 und das dortige Innengewinde eindrehbaren Gewindezapfen 26 auf, der in der Fachterminologie auch als "Pin" bezeichnet wird. Die Verbindungsstelle wird in der Fachterminologie auch als Tooljointtrennstelle 28 bezeichnet.

Die Unterzange 14 greift jeweils unterhalb der Tooljointtrennstelle 28 an und greift dabei dasjenige Bohrgestängeelement 12, welches das obere Ende des Bohrstrangs und damit das ortsfeste Bohrgestängeelement 12 bildet. Die Oberzange 16 greift oberhalb der Tooljointtrennstelle 28 an und greift entsprechend dasjenige Bohrgestängeelement 12, welches vom Bohrstrang gelöst oder mit dem Bohrstrang verbunden wird. Dafür und zur Übertragung der beim Betätigen der Gewindeverbindung erforderlichen Kraft weist das Zangensystem 10 vier Klemmblöcke 30, 32, 34, 36 auf, nämlich je zwei einander zugewandte/einander gegenüberliegende Klemmblöcke 30, 32 in der Unterzange 14 und je zwei einander zugewandte/einander gegenüberliegende Klemmblöcke 34, 36 in der Oberzange 16. Die translatorische Bewegung jedes Klemmblocks 30-36 erfolgt mittels einer hier ebenfalls als Hydraulikzylinder gezeigten Antriebseinheit 38.

Beim Verbinden eines neuen Bohrgestängeelements 12 mit dem Bohrstrang (Fig. 3, rechte Darstellung) durch Festziehen der Gewindeverbindung der beiden Bohrgestängeelemente 12 - die nachfolgende Erläuterung wird am Beispiel des Verbindens eines Bohrgestängeelements 12 mit dem Bohrstrang fortgesetzt; das Lösen eines Bohrgestängeelements 12 vom Bohrstrang erfolgt sinngemäß in umgekehrter Reihenfolge - wird die Oberzange 16 relativ zur Unterzange 14 bewegt, nämlich gedreht oder schrittweise gedreht. Die am Bohrstrang angreifende Unterzange 14 bleibt während des Verbindens des neuen Bohrgestängeelements 12 mit dem Bohrstrang mit dem das obere Ende des Bohrstrangs bildenden Bohrgestängeelement 12 in Kontakt.

Vorausgesetzt wird dabei, dass vor einem solchen Festziehen der Gewindeverbindung ein erstes Eindrehen des Gewindezapfens 26 des neuen Bohrgestängeelements 12 in das Innengewinde der Muffe 24 desjenigen Bohrgestängeelements 12 erfolgt ist, welches das obere Ende des Bohrstrangs bildet. Dies erfolgt mittels des bereits erwähnten sogenannten Spinners und mittels des Spinners wird das neue Bohrgestängeelement 12 in schnelle Rotation versetzt ("spinning") und auf diese Weise kommen die beiden Bohrgestängeelemente 12 und deren Gewindeteile 24, 26 jedenfalls so in Kontakt, dass eine sogenannte Schulter am unteren Ende des Gewindezapfens 26 auf einer Schulter am oberen Ende der Muffe 24 zur Auflage kommt, ohne dass die Gewindeverbindung bereits fest angezogen ist. Das Anziehen der Gewindeverbindung erfolgt mittels der Relativbewegung von Oberzange 16 und Unterzange 14 und das hier und im Folgenden beschriebene Verfahren erfolgt im Anschluss an das Spinnen.

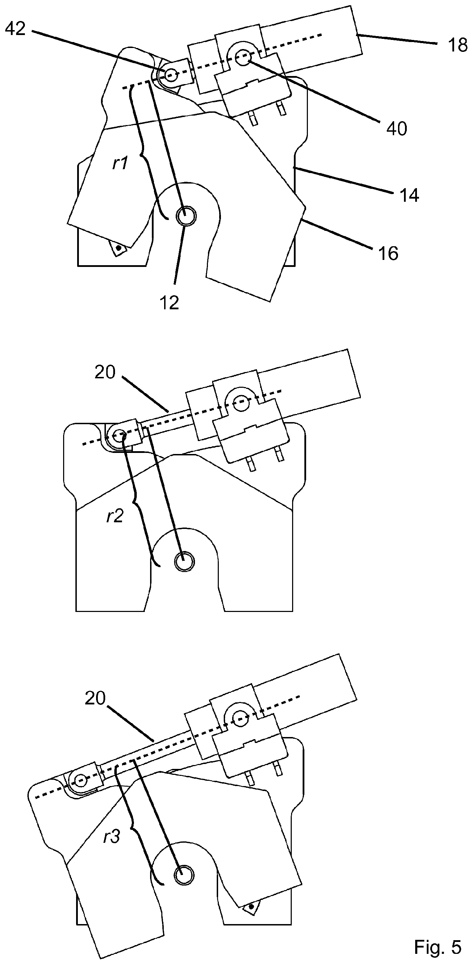

Beim Anziehen der Gewindeverbindung und beim Verdrehen der Oberzange 16 relativ zur Unterzange 14 wird mittels der Antriebseinheit 18 ein Drehmoment auf die Gewindeverbindung ausgeübt. Das Drehmoment berechnet sich bekanntlich als Produkt aus der ausgeübten Kraft und der Länge des wirksamen Hebelarms. Bei einem als Antriebseinheit 18 fungierenden Hydraulikzylinder - die nachfolgende Beschreibung wird im Interesse einer besseren Lesbarkeit, aber ohne Verzicht auf eine weitergehende Allgemeingültigkeit am Beispiel eines Hydraulikzylinders als Antriebseinheit 18 fortgesetzt - berechnet sich die Kraft als Produkt aus dem Druck, welcher mittels der vom Hydraulikaggregat 22 (Fig. 6) abgerufenen Hydraulikflüssigkeit ausgeübt wird, und der Fläche des Kolbens, mit dem die Kolbenstange 20 bewegt wird. Die mit der Hydraulikflüssigkeit beaufschlagte Fläche ist bekannt und konstant. Wie die Darstellung in Figur 5 zeigt, ändert sich allerdings die Länge des wirksamen Hebelarms in Abhängigkeit von der Lage der Oberzange 16. Die Länge des wirksamen Hebelarms entspricht der Länge eines Lots durch eine Verbindungslinie zwischen einem ersten Festpunkt 40, an dem der Hydraulikzylinder 18 schwenkbar an der Unterzange 14 angelenkt ist, und einem zweiten Festpunkt 42, an dem die Kolbenstange 20 an der Oberzange 16 angreift.

Die Darstellungen in Figur 5 zeigen dazu - ohne die Klemmblöcke 30-36 - Momentaufnahmen beim Verdrehen der Oberzange 16 relativ zur Unterzange 14. Dabei zeigt die obere Darstellung eine Position der Oberzange 16 von etwa -20° relativ zur Unterzange 14, die mittlere Darstellung eine Position von 0° relativ zur Unterzange 14 und die untere Darstellung eine Position von etwa +20° relativ zur Unterzange 14. Die jeweiligen Längen des resultierenden Lots auf der Verbindungslinie zwischen den beiden Festpunkten 40, 42 sind in den Darstellungen in Figur 5 mit r1, r2 und r3 bezeichnet (r1 > r2; r2 > r3). Die jeweilige Länge des Lots entspricht der jeweiligen Länge des wirksamen Hebelarms und damit ist erkennbar, dass das bei gleichem Hydraulikdruck mittels des Hydraulikzylinders 18 aufbringbare Drehmoment von der ausgefahrenen Länge der Kolbenstange 20 abhängt. Im Weiteren bedeutet dies, dass bei konstantem Hydraulikdruck das maximale Drehmoment, mit dem die Gewindeverbindung zwischen zwei Bohrgestängeelementen 12 mittels eines Zangensystems 10 der hier beschriebenen Art festgezogen werden kann, davon abhängt, wie die Oberzange 16 relativ zur Unterzange 14 liegt (verdreht ist) und wie weit die Kolbenstange 20 ausgefahren ist, wenn die Gewindeverbindung fest wird (Fig. 4, rechte Darstellung).

Für ein definiertes Anzugsmoment wird demgemäß mittels eines vom Zangensystem 10 umfassten oder dem Zangensystem 10 zugeordneten Wegmesssystems 44 (Fig. 6) die Lage der Oberzange 16 relativ zur Unterzange 14 erfasst, bei der gezeigten Ausführungsform indem die mittels des Wegmesssystems 44 die jeweils ausgefahrene Länge der Kolbenstange 20 erfasst wird. Das Wegmesssystem 44 kann dabei - zum Beispiel in einer Ausführungsform als Inkrementalgeber oder mit einem Inkrementalgeber - eine an der Kolbenstange 20 angebrachte oder mit der Kolbenstange 20 mitbewegte Maßverkörperung auswerten. Zusätzlich oder alternativ kommt auch in Betracht, dass das Wegmesssystems 44 eine Position des im Hydraulikzylinder 18 zum Ein- oder Ausfahren der Kolbenstange 20 bewegten Kolbens erfasst, zum Beispiel im Wege einer Durchflussmessung der dafür in den Hydraulikzylinder 18 eingebrachten und/oder der aus dem Hydraulikzylinder 18 austretenden Hydraulikflüssigkeit. Im Folgenden werden diese und gegebenenfalls weitere Möglichkeiten im Interesse einer besseren Lesbarkeit der Beschreibung sowie im Hinblick auf eine möglichst weitgehende Abstraktion der dem Wegmesssystem 44 zugrunde liegenden und grundsätzlich austauschbaren Sensorik dahingehend zusammengefasst, dass von einer Erfassung einer Ausfahrposition der Kolbenstange 20 - oder kurz von einer Kolbenstangenposition 46 - gesprochen wird. Die Kolbenstangenposition 46 ist ein Maß für eine Lage der Oberzange 16 relativ zur Unterzange 14, denn mittels der Kolbenstange 20 wird die Oberzange 16 relativ zur Unterzange 14 bewegt.

An dieser Stelle sei angemerkt, dass sich die Kolbenstangenposition 46 rechnerisch auch ermitteln lässt, wenn mittels des Wegmesssystems 44 die Rotationslage der Oberzange 16 relativ zur Unterzange 14 ermittelt wird und ansonsten die Positionen der Festpunkte 40, 42 relativ zur Unterzange 14 bzw. zur Oberzange 16 bekannt sind. Auch eine solche rechnerisch ermittelte Kolbenstangenposition 46 soll umfasst sein, wenn hier und im Folgenden von einer Lage der Oberzange 16 relativ zur Unterzange 14 oder einer mittels eines Wegmesssystems 44 ermittelten Kolbenstangenposition 46 gesprochen wird.

Mittels einer in der Darstellung in Figur 6 gezeigten Steuereinheit 48, die als Eingangssignale zumindest die Kolbenstangenposition 46 als eine vom Wegmesssystem 44 erhältliche Positionsinformation (Positionsinformation zur Lage der Oberzange 16 relativ zur Unterzange 14) und zumindest einen Druckistwert 50, 52 bezüglich eines am Hydraulikzylinder 18 (kolbenseitig und/oder stangenseitig) bei einer entsprechenden Gegenkraft anstehenden Drucks verarbeitet, lässt sich also für jede Relativposition der Oberzange 16 zur Unterzange 14 das jeweils aufbringbare Drehmoment (Anzugsmoment) ermitteln und mit einem vorgegebenen oder vorgebbaren Sollanzugsmoment 54 vergleichen. Zur Ermittlung des Anzugsmoments wird mittels der Steuereinheit 48 das Produkt aus der wirkenden Kraft und dem wirksamen Hebelarm gebildet. Die wirkende Kraft wird mittels der Steuereinheit 48 als das Produkt aus dem jeweiligen Druckistwert 50, 52 und der mit dem Druck beaufschlagten Fläche des Hydraulikzylinders 18 ermittelt. Die Länge des wirksamen Hebelarms (siehe Längen r1, r2 und r3 in der Darstellung in Fig. 5) wird mittels der Steuereinheit 48 zum Beispiel anhand einer Tabelle (Lookup-Tabelle) ermittelt, in welche für eine Mehrzahl von Kolbenstangenpositionen 46 die jeweils zugehörige und zuvor berechnete wirksame Länge des Hebelarms eingetragen ist. Bei von der Tabelle nicht umfassten Kolbenstangenpositionen 46 (Zwischenwerten) erfolgt eine Interpolation anhand der von der Tabelle umfassten Werte. Alternativ kann die Länge des wirksamen Hebelarms auch mittels der Steuereinheit 48 anhand der jeweiligen Kolbenstangenposition 46 und dem bekannten Abstand der beiden Festpunkte 40, 42 zum Zentrum der zu verbindenden Bohrgestängeelemente 12 berechnet werden. Sobald das tatsächlich mittels des Zangensystems 10 aufgebrachte Dreh-/Anzugsmoment das Sollanzugsmoment 54 erreicht oder überschreitet, ist das Festziehen des Gewindes der beiden Bohrgestängeelemente 12 beendet.

Die zum Beispiel in Form einer speicherprogrammierbaren Steuerung oder dergleichen realisierte Steuereinheit 48 umfasst in an sich bekannter Art und Weise zum Beispiel einen Mikroprozessor oder eine vergleichbare Funktionseinheit und einen Speicher, in den ein Steuerprogramm geladen ist, das beim Betrieb der Steuereinheit 48 und beim Betrieb des Zangensystems 10 ausgeführt wird. Unter Kontrolle des Steuerprogramms erfolgt auf Basis der gemessenen Kolbenstangenposition 46 und dem Sollanzugsmoment 54 das Verbinden eines Bohrgestängeelements 12 mit dem Bohrstrang unter folgenden Bedingungen: Zum einen ist das Anzugsmoments auf das vorgegebene Sollanzugsmoment 54 begrenzt. Zum anderen wird das vorgegebene Sollanzugsmoment 54 sicher erreicht.

Unter Kontrolle der Steuereinheit 48 erfolgt darüber hinaus auch die Ansteuerung des Hydraulikzylinders 18 zum Ausführen einer oder mehrerer im Folgenden als Hub bezeichneter Bewegungen der Oberzange 16 relativ zur Unterzange 14. Die Oberzange 16 hat zum Beispiel einen Bewegungsbereich von -20° bis +20° relativ zur Unterzange 14, wie dies exemplarisch, aber ohne Verzicht auf eine weitergehende Allgemeingültigkeit, in Figur 5 gezeigt ist. Dann beginnt ein Hub bei -20° und endet bei +20°. Die vom Wegmesssystem 44 erhältliche Kolbenstangenposition 46 ist eindeutig mit unterschiedlichen Rotationslagen der Oberzange 16 relativ zur Unterzange 14 verknüpft, d.h. die Endposition eines Hubs bei +20° ist eindeutig und automatisch mittels der Steuereinheit 48 auch anhand der bei dieser Rotationslage resultierenden Kolbenstangenposition 46 erkennbar. Mittels der Steuereinheit 48 erfolgt also auch eine Überwachung des jeweiligen Momentanwerts der Kolbenstangenposition 46 in Bezug auf die Kolbenstangenposition 46 bei der Endposition eines Hubs bei +20°. Sobald diese Kolbenstangenposition 46 mittels der Steuereinheit 48 erkannt wird, erfolgt automatisch ein Rückhub, also ein Öffnen der Klemmblöcke 34, 36 der Oberzange 16 und ein Drehen der Oberzange 16 relativ zur Unterzange 14 in die Anfangsposition eines neuen Hubs bei -20°. Auch das Erreichen dieser Anfangsposition ist mittels der Steuereinheit 48 anhand einer entsprechenden Kolbenstangenposition 46 erkennbar. Sobald die Anfangsposition eines neuen Hubs erreicht ist, werden unter Kontrolle der Steuereinheit 48 die Klemmblöcke 34, 36 wieder zugefahren und mit entsprechender Ansteuerung des Steuerblocks 56 durch die Steuereinheit 48 beginnt ein neuer Hub. Dies wird zyklisch solange fortgesetzt, bis das neue Bohrgestängeelement 12 - bei Erfüllung der beiden oben genannten Bedingungen - mit dem Bohrstrang verbunden ist. Auch ohne dass darauf im Folgenden ausdrücklich Bezug genommen ist, versteht sich, dass mittels der Steuereinheit 48 beim Verbinden oder Lösen eines Bohrgestängeelements 42 vom bzw. mit dem Bohrstrang durch einen oder mehrere Hübe bzw. einen oder mehrere Rückhübe stets eine unterlagerte Steuerung und/oder Überwachung der einzelnen Hubzyklen realisiert ist.

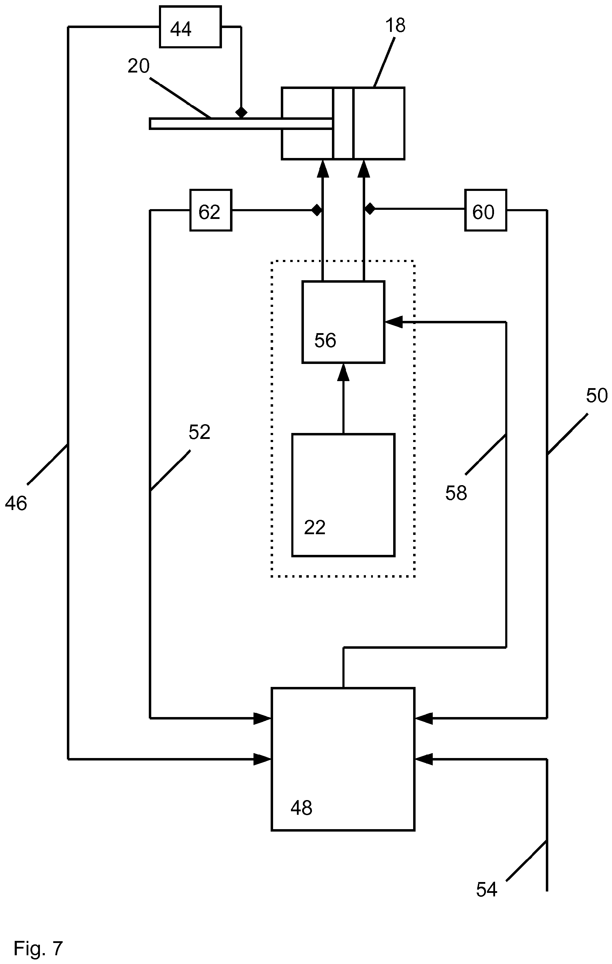

Die Darstellung in Figur 7 zeigt in schematisch vereinfachter Form die Steuereinheit 48 und die Wirkzusammenhänge beim Beaufschlagen des Hydraulikzylinders 18 mit Druck zum Verdrehen der Oberzange 16 relativ zur Unterzange 14 und zum Verschrauben eines Bohrgestängeelements 12 mit dem Bohrstrang. Auf eine Wiederholung der Darstellung des Zangensystems 10 wurde für die Darstellung in Figur 7 verzichtet. Insoweit wird auf die Darstellung in Figur 6 verwiesen.

Die Steuereinheit 48 verarbeitet als Maß für die Lage der Oberzange 16 relativ zur Unterzange 14 die kontinuierlich aufgenommene Kolbenstangenposition 46 oder einen anderen diese Lage beschreibenden Messwert sowie das Sollanzugsmoment 54. Zum Auslösen der Drehbewegung der Oberzange 16 relativ zur Unterzange 14 wird der Steuerblock 56 mit einer jeweiligen Stellgröße 58 angesteuert. Beim Vorhub, also beim Verbinden eines Bohrgestängeelements 12 mit dem Bohrstrang, wird entsprechend der Ansteuerung des Steuerblocks 56 eine bestimmte Hydraulikflüssigkeitsmenge pro Zeiteinheit in die Kolbenkammer des Hydraulikzylinders 18 gefördert (beim Rückhub in die Ringkammer). Wenn beim Verbinden des Bohrgestängeelements 12 mit dem Bohrstrang die Gewindeverbindung fest wird und sich mithin ein Gegenmoment aufbaut, beginnt auch ein merklicher Druckaufbau in der Kolbenkammer. Der Druck in der Kolbenkammer und in der vom Steuerblock 56 zur Kolbenkammer verlaufenden Zuleitung wird mittels eines geeigneten Drucksensors erfasst, zum Beispiel eines Drucksensors in Form einer kolbenkammerseitigen Druckmessdose 60. Ein von der Druckmessdose 60 erhältlicher Druckistwert 50 wird mittels der Steuereinheit 48 als Eingangsgröße verarbeitet. Anhand der Kolbenstangenposition 46 und des Druckistwerts 50 sowie auf Basis der bekannten und konstanten Größe der Kolbenfläche werden mittels Steuereinheit 48 kontinuierlich oder quasikontinuierlich, also zyklisch in einem kurzen Zeitraster, die jeweils wirksame Länge des Hebelarms und die wirkende Kraft und damit das jeweils mit dem Zangensystem 10 aufgebrachte Dreh-/Anzugsmoment ermittelt. Der Druckistwert 50 ist damit ein Beispiel für ein in Bezug auf den zum Bewegen der Oberzange 16 bestimmten Hydraulikzylinder 18 aufgenommenes Maß für eine von diesem ausgeübte Kraft. Sobald das ermittelte aufgebrachte Anzugsmoment das vorgegebene Sollanzugsmoment 54 erreicht, ist das Verbinden des Bohrgestängeelements 12 mit dem Bohrstrang unter Einhaltung der beiden oben genannten Bedingungen (Begrenzung des Anzugsmoments auf das Sollanzugsmoment 54 und garantiertes Erreichen des Sollanzugsmoments 54) beendet. Die Klemmblöcke 30-36 des Zangensystems 10 können aufgefahren werden und das Zangensystem 10 kann insgesamt in eine Parkposition verfahren werden.

Zum Lösen eines Bohrgestängeelements 12 vom Bohrstrang wird die Ringkammer des Hydraulikzylinders 18 mit Hydraulikflüssigkeit beaufschlagt. Optional wird ein sich beim Lösen der Gewindeverbindung aufbauender Druck mittels einer ringkammerseitigen Druckmessdose 62 erfasst. Mittels der Steuereinheit 48 wird dann anhand der Kolbenstangenposition 46 sowie eines von der Druckmessdose 62 erhältlichen Druckistwerts 52 das jeweils wirkende Drehmoment ermittelt (unter Berücksichtigung der im Vergleich zur Kolbenfläche kleineren Ringfläche). Das jeweils ermittelte Drehmoment zum Trennen ("break") der Gewindeverbindung wird zum Beispiel erfasst und für nachfolgende statistische Auswertungen und dergleichen protokolliert und/oder gespeichert. Des Weiteren kommt auch in Betracht, das zum Trennen aufgebrachte Drehmoment mit dem ursprünglich beim Herstellen der Gewindeverbindung ("make") aufgebrachten Drehmoment zu vergleichen. Dafür wird für jede Tooljointtrennstelle 28 entlang des Bohrstrangs das beim Herstellen der Gewindeverbindung aufgebrachte Drehmoment und/oder das jeweils vorgegebene Sollanzugsmoment 54 erfasst und beim Ausbauen des Bohrstrangs in umgekehrter Reihenfolge mit dem zum Trennen der Gewindeverbindung erforderlichen Drehmoment verglichen. Auch die dabei erhältlichen Vergleichsergebnisse können für nachfolgende statistische Auswertungen und dergleichen protokolliert und/oder gespeichert werden.

Beim Herstellen der Gewindeverbindung ("make") wird der Steuerblock 56 mittels einer entsprechenden Stellgröße 58 zumindest anfänglich so angesteuert, dass sich eine maximale Durchflussmenge und damit eine maximale Geschwindigkeit für die Relativbewegung der Oberzange 16 zur Unterzange 14 ergibt (hohe Anfangsgeschwindigkeit). Mittels des Steuerblocks 56 wird eine Durchflussmenge der vom Hydraulikaggregat 22 zum Hydraulikzylinder 18 gelangenden Hydraulikflüssigkeit eingestellt. Die jeweilige Durchflussmenge bestimmt die Geschwindigkeit, mit der sich die Kolbenstange 20 bewegt und damit die Geschwindigkeit der Relativbewegung der Oberzange 16 zur Unterzange 14. Sobald die Gewindeverbindung beginnt, fest zu werden, sobald sich also ein mittels der Druckmessdose 60 sensierbarer merklicher Gegendruck aufbaut, wird die Geschwindigkeit der Relativbewegung der Oberzange 16 zur Unterzange 14 im Vergleich zu der hohen Anfangsgeschwindigkeit reduziert. Mittels der Steuereinheit 48 wird zu diesem Zweck anhand des von der Druckmessdose 60 erhältlichen Druckistwerts 50 eine Stellgröße 58 zur entsprechenden Ansteuerung des Steuerblocks 56 generiert. Zur Generierung der Stellgröße 58 kommen grundsätzlich unterschiedliche Möglichkeiten in Betracht.

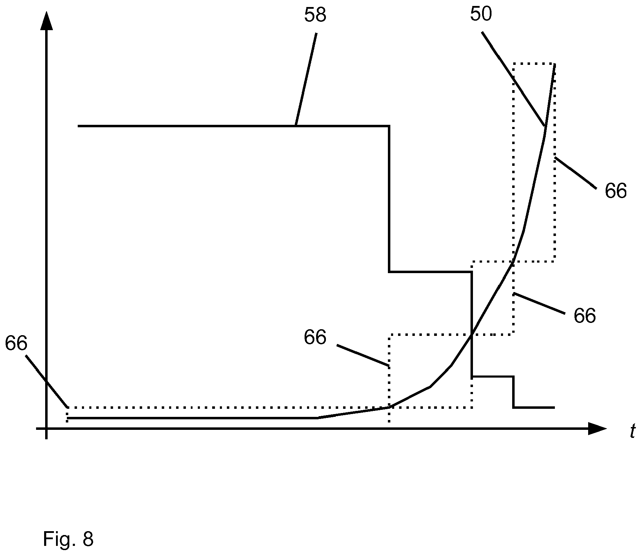

Zum einen kann - wie dies schematisch vereinfacht in Figur 8 gezeigt ist - der erwartete Wertebereich des Druckistwerts 50 in eine Mehrzahl von Abschnitten 66 eingeteilt werden, wobei jedem Wertebereichsabschnitt 66 eine Stellgröße 58 zugeordnet ist. Bei größer werdenden, jeweils von einem Wertebereichsabschnitt 66 umfassten Druckistwerten 50 ist dem Wertebereichsabschnitt 66 jeweils eine Stellgröße 58 zugeordnet, die zu einer Reduktion der Durchflussmenge der vom Hydraulikaggregat 22 durch den Steuerblock 56 zum Hydraulikzylinder 18 gelangenden Hydraulikflüssigkeit führt. Im Ergebnis ist damit jedem Wertebereichsabschnitt 66 ein Maß für eine Geschwindigkeit der Relativbewegung der Oberzange 16 zur Unterzange 14 zugeordnet und je größer der sich aufbauende Gegendruck wird - je fester also die Gewindeverbindung wird - desto geringer wird die Geschwindigkeit, mit der die Oberzange 16 relativ zur Unterzange 14 bewegt wird.

Zum anderen kann die zeitliche Änderung des Druckistwerts 50 betrachtet werden und mittels der Steuereinheit 48 eine zur jeweiligen zeitlichen Änderung umgekehrt proportionale, zum Beispiel reziproke Stellgröße 58 generiert werden, so dass bei einer zumindest anfänglich verschwindenden oder nur geringen zeitlichen Änderung des Druckistwerts 50 eine Stellgröße 58 resultiert, aufgrund derer die Oberzange 16 mit maximaler Geschwindigkeit relativ zur Unterzange 14 bewegt wird. Wenn die zeitliche Änderung des Druckistwerts 50 zunimmt, resultiert eine Stellgröße 58, aufgrund der die Geschwindigkeit der Bewegung der Oberzange 16 relativ zur Unterzange 14 kontinuierlich reduziert wird.

Die beiden skizzierten Möglichkeiten sind auch kombinierbar, zum Beispiel derart, dass bei bestimmten Wertebereichen des Druckistwerts 50 eine mit dem jeweiligen Wertebereich durch eine entsprechende Vorgabe verknüpfte Stellgröße 58 verwendet wird, während bei anderen Wertebereichen des Druckistwerts 50 dessen zeitliche Änderung und eine auf dieser Basis generierte Stellgröße 58 verwendet wird.

Bei einer besonderen Ausführungsform des Verfahrens kommt eine solche Kombination dahingehend in Betracht, dass beim anfänglichen Bewegen der Oberzange 16 und nur geringen Druckistwerten 50, also einem von einem minimalen Druckistwert 50 ausgehenden Wertebereich bis zu einem vorgegebenen oder vorgebbaren ersten geringen Druckistwert 50, eine mit diesem Wertebereich durch eine entsprechende Vorgabe verknüpfte Stellgröße 58 zur möglichst schnellen Bewegung der Oberzange 16 verwendet wird, dass bei einem zum Beispiel symmetrisch um das Sollanzugsmoment 54 (Sollanzugsmoment 54 +/- x%) verteilten Wertebereich eine mit diesem Wertebereich durch eine entsprechende Vorgabe verknüpfte Stellgröße 58 zur möglichst langsamen Bewegung der Oberzange 16 verwendet wird und dass zwischen diesen beiden Wertebereichen eine auf Basis der zeitlichen Änderung des Druckistwerts 50 generierte Stellgröße 58 verwendet wird.

Beim Lösen der Gewindeverbindung ("break") wird der Steuerblock 56 mittels einer entsprechenden Stellgröße 58 entweder dauerhaft so angesteuert, dass sich eine möglichst große Geschwindigkeit der Bewegung der Oberzange 16 ergibt. Alternativ kann die Stellgröße 58 auch rampenartig - mit einer vorgegebenen oder vorgebbaren Steigung - bis zu einem Maximalwert ansteigen, so dass das anfängliche Lösen der Gewindeverbindung mit einer zunächst geringen, aber kontinuierlich zunehmenden Geschwindigkeit und dann mit einer möglichst großen Geschwindigkeit der Bewegung der Oberzange 16 erfolgt.

Alternativ zu dem bisher beschriebenen Verfahren zum Herstellen der Gewindeverbindung ("make") kommt auch in Betracht, dass mittels der Steuereinheit 48 automatisch anhand eines vorgegebenen oder vorgebbaren Sollanzugsmoments 54 eine Stellgröße 58 ermittelt wird, die zu einem dem Sollanzugsmoment 54 entsprechenden definierten Anzugsmoment führt. Die Stellgröße 58 wird zur Ansteuerung des Hydraulikaggregats 22 oder eines dem Hydraulikaggregat 22 nachgeschalteten und zumindest für den kolbenseitigen Anschluss des Hydraulikzylinders 18 ein Proportionalventil umfassenden Steuerblocks 56 verwendet. Anhand der vom Wegmesssystem 44 als Messwert zur Verfügung stehenden Kolbenstangenposition 46 und der bekannten und konstanten Kolbenfläche kann automatisch mittels der Steuereinheit 48 ein bei der jeweiligen Kolbenstangenposition 46 zum Erreichen eines dem Sollanzugsmoment 54 entsprechenden Anzugsmoments notwendiger Druck ermittelt werden. Eine dem jeweils ermittelten notwendigen Druck entsprechende und bei einer Veränderung der Kolbenstangenposition 46 nachgeführte Stellgröße 58 wird auf das Hydraulikaggregat 22 oder den Steuerblock 56 gegeben. Damit wird die Gewindeverbindung stets maximal mit dem Sollanzugsmoment 54 festgezogen. Das Lösen der Gewindeverbindung kann entsprechend oder wie weiter oben beschrieben erfolgen.

Das Ende des Verbindens eines Bohrgestängeelements 12 mit dem Bohrstrang kann dabei automatisch mittels der Steuereinheit 48 daran erkannt werden, dass sich die Kolbenstangenposition 46 während einer vorgegebenen oder vorgebbaren Zeitspanne nicht mehr ändert (weil die Gewindeverbindung bereits fest ist und sich daher die Relativposition der Oberzange 16 zur Unterzange 14 nicht mehr ändert). Die Überwachung der Änderung der Kolbenstangenposition 46 kann auch als zusätzliches Abbruchkriterium verwendet werden. Bei einer Überwachung der Änderung der Kolbenstangenposition 46 als zusätzliches Abbruchkriterium kommt dies für eine Sicherheitsabschaltung in Betracht.

Zum Lösen eines Bohrgestängeelements 12 vom Bohrstrang kommt bei einer besonderen Ausführungsform des Verfahrens zum Betrieb des Zangensystems 10 in Betracht, dass die Oberzange 16 vor dem Zufahren der Klemmblöcke 34, 36 unter Kontrolle der Steuereinheit 48 und anhand der Kolbenstangenposition 46 in eine Relativposition zur Unterzange 14 verfahren wird, bei der auf Basis des dann wirkenden Hebelarms das maximale Drehmoment aufgebracht werden kann. Dann ist ein geringerer Hydraulikdruck ausreichend, als wenn der Rückhub zum Lösen der Gewindeverbindung bei einer vollständig ausgefahrenen Kolbenstange 20 und bei einer maximal zur Unterzange 14 verdrehten Oberzange 16 beginnen würde. Sobald unter Kontrolle der Steuereinheit 48 die Position des "günstigsten Hebelarms" erreicht ist, werden die Klemmblöcke 34, 36 automatisch zugefahren und durch Beaufschlagung der Ringkammer mit Hydraulikflüssigkeit beginnt das Lösen der Gewindeverbindung.

Einzelne im Vordergrund stehende Aspekte der hier vorgelegten Beschreibung lassen sich kurz wie folgt zusammenfassen: Angegeben werden ein Verfahren zum Betrieb eines zum Verbinden eines Bohrgestängeelements 12 mit einem oftmals ortsfesten Bohrgestängeelement 12 oder zum Trennen eines Bohrgestängeelements von einem anderen Bohrgestängeelement 12 bestimmten Zangensystems 10, welches eine Unterzange 14 und eine mittels einer Antriebseinheit 18 relativ zur Unterzange 14 bewegliche Oberzange 16 umfasst, wobei mittels eines Wegmesssystems 44 eine Lage 46 der Oberzange 16 relativ zur Unterzange 14 erfassbar ist und im Betrieb erfasst wird, wobei mittels einer Steuereinheit 48 kontinuierlich oder regelmäßig ein in Abhängigkeit von der erfassten Lage 46 ermitteltes Anzugsmoment mit einem vorgegebenen oder vorgebbaren Sollanzugsmoment 54 verglichen wird und wobei das Verbinden der beiden Bohrgestängeelemente 12 beendet ist, wenn das ermittelte Anzugsmoment das Sollanzugsmoment 54 erreicht oder überschreitet. Angegeben wird des Weiteren ein zur Ausführung des Verfahrens bestimmtes und eingerichtetes Zangensystem 10. Als Maß für die Lage 46 der Oberzange 16 relativ zur Unterzange 14 wird zum Beispiel mittels eines Wegmesssystems 44 eine Kolbenstangenposition 46 erfasst. Als Maß für die Lage 46 der Oberzange 16 kommen auch andere Messwerte in Betracht. Anhand der Kolbenstangenposition 46 oder jedem anderen lagespezifischen Messwert wird mittels der Steuereinheit 48 die wirksame Länge des Hebelarms und auf dessen Basis das jeweils wirkende Anzugsmoment ermittelt.

### Bezugszeichenliste

- 10: Zangensystem
- 12: Bohrgestängeelement
- 14: Unterzange
- 16: Oberzange
- 18: Antriebseinheit / Hydraulikzylinder
- 20: Kolbenstange
- 22: Hydraulikaggregat
- 24: Muffe / Gewindeteil
- 26: Gewindezapfen / Gewindeteil
- 28: Tooljointtrennstelle
- 30-36: Klemmblock
- 38: Antriebseinheit
- 40: erster Festpunkt (des Hydraulikzylinders an der Unterzange)
- 42: zweiter Festpunkt (des Hydraulikzylinders an der Oberzange)
- 44: Wegmesssystem
- 46: Lage der Oberzange / Kolbenstangenposition
- 48: Steuereinheit
- 50: (kolbenseitiger) Druckistwert
- 52: (stangenseitiger) Druckistwert
- 54: Sollanzugsmoment
- 56: Steuerblock
- 58: Stellgröße
- 60: (kolbenseitige) Druckmessdose
- 62: (stangenseitige) Druckmessdose
- 64: (frei)
- 66: Wertebereichsabschnitt

## Patentansprüche

1. Verfahren zum Betrieb eines zum Verbinden eines Bohrgestängeelements (12) mit einem ortsfesten Bohrgestängeelement (12) bestimmten Zangensystems (10),
wobei das Zangensystem (10) eine Unterzange (14) und eine mittels einer Antriebseinheit (18) relativ zur Unterzange (14) drehbare Oberzange (16) umfasst,
wobei die Antriebseinheit (18) einseitig drehfest mit der Unterzange (14) verbunden ist und zum Drehen der Oberzange (16) mittels einer Kolbenstange (20) an dieser angreift,
wobei mittels der Antriebseinheit (18) zur Veränderung einer Lage (46) der Oberzange (16) relativ zur Unterzange (14) die Kolbenstange (20) ein- oder ausgefahren wird,
wobei mittels eines Wegmesssystems (44) eine Lage (46) der Oberzange (16) relativ zur Unterzange (14) erfassbar ist und im Betrieb erfasst wird,
**dadurch gekennzeichnet,**
**dass** die Lage (46) der Oberzange (16) relativ zur Unterzange (14) in Form einer mittels des Wegmesssystems (44) erfassten ausgefahrenen Länge der Kolbenstange (20) erfasst wird,
**dass** mittels einer Steuereinheit (48) kontinuierlich oder regelmäßig ein in Abhängigkeit von der erfassten Lage (46) ermitteltes Anzugsmoment mit einem vorgegebenen oder vorgebbaren Sollanzugsmoment (54) verglichen wird
und
**dass** das Verbinden der beiden Bohrgestängeelemente (12) beendet ist, wenn das ermittelte Anzugsmoment das Sollanzugsmoment (54) erreicht oder überschreitet.

2. Verfahren nach Anspruch 1,
wobei das Anzugsmoment mittels der Steuereinheit (48) automatisch in Abhängigkeit von der erfassten Lage (46) und in Abhängigkeit von einem in Bezug auf die zum Drehen der Oberzange (16) bestimmte Antriebseinheit (18) aufgenommenen Maß (50) für eine von der Antriebseinheit (18) ausgeübte Kraft ermittelt wird.

3. Verfahren nach Anspruch 2, wobei bei einem als Antriebseinheit (18) fungierenden Hydraulikzylinder (18) mittels eines dem Hydraulikzylinder (18) zugeordneten Drucksensors (60) ein beim Drehen der Oberzange (16) im Hydraulikzylinder (18) wirkender Druck erfasst wird.

4. Verfahren nach einem der vorangehenden Ansprüche,
wobei die Oberzange (16) beim Beginn des Verbindens der beiden Bohrgestängeelemente (12) mit einer Anfangsgeschwindigkeit gedreht wird und wobei die Geschwindigkeit, mit der die Oberzange (16) gedreht wird, in Abhängigkeit von einem sich beim Verbinden der beiden Bohrgestängeelemente (12) aufbauenden Gegenmoment reduziert wird.

5. Verfahren nach Anspruch 4, wobei als Maß für das sich beim Verbinden der beiden Bohrgestängeelemente (12) aufbauende Gegenmoment der beim Drehen der Oberzange (16) im Hydraulikzylinder (18) wirkende Druck verwendet wird.

6. Verfahren nach einem der vorangehenden Ansprüche sowie zum Betrieb des Zangensystems (10) zum Lösen eines Bohrgestängeelements (12) von einem ortsfesten Bohrgestängeelement (12),
wobei anhand einer vom Wegmesssystem (44) erfassten jeweiligen Lage (46) der Oberzange (16) relativ zur Unterzange (14) die Oberzange (16) vor dem Beginn des Lösens der Verbindung der beiden Bohrgestängeelemente (12) in eine Position verfahren wird, in welcher ein maximales Drehmoment ausgeübt werden kann.

7. Computerprogramm mit Programmcodemitteln, um alle Schritte von jedem beliebigen der Ansprüche 1 bis 6 durchzuführen, wenn das Computerprogramm auf einer Steuereinheit (48) eines zum Verbinden eines Bohrgestängeelements (12) mit einem ortsfesten Bohrgestängeelement (12) bestimmten Zangensystems (10) ausgeführt wird.
Ansprüche 1 bis 7 in der als gewährbar mitgeteilten Form (siehe Anschreiben; siehe entsprechende Anlage)

8. Zangensystem (10) zum Verbinden eines Bohrgestängeelements (12) mit einem ortsfesten Bohrgestängeelement (12),
wobei das Zangensystem (10) eine Unterzange (14) und eine mittels einer Antriebseinheit (18) relativ zur Unterzange (14) drehbare Oberzange (16) umfasst,
wobei die Antriebseinheit (18) einseitig drehfest mit der Unterzange (14) verbunden ist und zum Drehen der Oberzange (16) mittels einer Kolbenstange (20) an dieser angreift,
wobei mittels der Antriebseinheit (18) zur Veränderung der Lage (46) der Oberzange (16) relativ zur Unterzange (14) die Kolbenstange (20) ein- oder ausfahrbar ist,
wobei das Zangensystem (10) ein Wegmesssystem (44) und eine Steuereinheit (48) umfasst,
wobei das Wegmesssystem (44) dafür bestimmt und eingerichtet ist, beim Betrieb des Zangensystems (10) eine Lage (46) der Oberzange (16) relativ zur Unterzange (14) zu erfassen und
wobei mittels des Wegmesssystems (44) beim Betrieb des Zangensystems (10) eine Lage (46) der Oberzange (16) relativ zur Unterzange (14) erfassbar ist,
**dadurch gekennzeichnet,**
**dass** das Wegmesssystem (44) dafür bestimmt und eingerichtet ist, beim Betrieb des Zangensystems (10) die Lage (46) der Oberzange (16) relativ zur Unterzange (14) in Form einer mittels des Wegmesssystems (44) erfassten ausgefahrenen Länge der Kolbenstange (20) zu ermitteln und
**dass** die Lage (46) der Oberzange (16) relativ zur Unterzange (14) beim Betrieb des Zangensystems (10) in Form einer mittels des Wegmesssystems (44) erfassten ausgefahrenen Länge der Kolbenstange (20) erfassbar ist,
**dass** die Steuereinheit (48) dafür bestimmt und eingerichtet ist, kontinuierlich oder regelmäßig in Abhängigkeit von der Lage (46) der Oberzange (16) relativ zur Unterzange (14) ein beim Betrieb des Zangensystems (10) beim Verbinden der beiden Bohrgestängeelemente (12) wirkendes Anzugsmoment zu ermitteln und
**dass** mittels der Steuereinheit (48) kontinuierlich oder regelmäßig in Abhängigkeit von der Lage (46) der Oberzange (16) relativ zur Unterzange (14) ein beim Betrieb des Zangensystems (10) beim Verbinden der beiden Bohrgestängeelemente (12) wirkendes Anzugsmoment ermittelbar ist,
wobei die Steuereinheit (48) dafür bestimmt und eingerichtet ist, beim Betrieb des Zangensystems (10) das Anzugsmoment mit einem vorgegebenen oder vorgebbaren Sollanzugsmoment (54) zu vergleichen und
wobei beim Betrieb des Zangensystems (10) mittels der Steuereinheit (48) das Anzugsmoment mit einem vorgegebenen oder vorgebbaren Sollanzugsmoment (54) vergleichbar ist und
wobei die Steuereinheit (48) dafür bestimmt und eingerichtet ist, beim Betrieb des Zangensystems (10) das Verbinden der beiden Bohrgestängeelemente (12) zu beenden, wenn das ermittelte Anzugsmoment das Sollanzugsmoment (54) erreicht oder überschreitet und
wobei beim Betrieb des Zangensystems (10) mittels der Steuereinheit (48) das Verbinden der beiden Bohrgestängeelemente (12) beendbar ist, wenn das ermittelte Anzugsmoment das Sollanzugsmoment (54) erreicht oder überschreitet.

9. Zangensystem (10) nach Anspruch 8 , wobei in einem Speicher der Steuereinheit als Steuerprogramm ein Computerprogramm nach Anspruch 7 geladen ist.

10. Bohranlage mit einem Zangensystem (10) nach einem der Ansprüche 8 oder 9.

## Claims

1. Method of operating a tong system (10) intended for connecting a drill pipe element (12) to a stationary drill pipe element (12),
whereby the tong system (10) comprises a lower tong (14) and an upper tong (16) rotatable relative to the lower tong (14) by means of a drive unit (18),
whereby the drive unit (18) is connected to the lower tong (14) non-rotating on one side and engages on the upper tong (16) by means of a piston rod (20) in order to rotate the latter,
whereby the piston rod (20) is retracted or extended by means of the drive unit (18) to change a position (46) of the upper tong (16) relative to the lower tong (14),
whereby a position (46) of the upper tong (16) relative to the lower tong (14) can be detected by means of a displacement measuring system (44) and is detected during operation,
**characterised in**
**that** the position (46) of the upper tong (16) relative to the lower tong (14) is detected in the form of an extend-ed length of the piston rod (20) detected by means of the displacement measuring system (44),
**that** a control unit (48) is used to continuously or regularly compare a tightening torque determined as a function of the detected position (46) with a predetermined or predeterminable target tightening torque (54)
and
**that** the connection of the two drill pipe elements (12) is completed when the detected tightening torque reaches or exceeds the target tightening torque (54).

2. Method according to claim 1,
whereby the tightening torque is automatically determined by means of the control unit (48) as a function of the detected position (46) and as a function of a dimension (50) recorded in relation to the drive unit (18) intended for rotating the upper tong (16) for a force exerted by the drive unit (18).

3. Method according to claim 2, whereby a pressure acting in the hydraulic cylinder (18) during rotation of the upper tong (16) is detected by means of a pressure sensor (60) assigned to the hydraulic cylinder (18) in a hydraulic cyl-inder (18) acting as a drive unit (18).

4. Method according to one of the preceding claims,
whereby the upper tong (16) is rotated at an initial speed at the start of the connection of the two drill pipe elements (12) and whereby the speed at which the upper tong (16) is rotated is reduced as a function of a counter-torque which builds up during the connection of the two drill pipe elements (12).

5. Method according to claim 4, whereby the pressure act-ing in the hydraulic cylinder (18) during rotation of the upper tong (16) is used as a measure of the counter-torque that builds up when the two drill pipe elements (12) are connected.

6. Method according to one of the preceding claims and for operating the tong system (10) for releasing a drill pipe element (12) from a stationary drill pipe element (12),
whereby, on the basis of a respective position (46) of the upper tong (16) relative to the lower tong (14) detected by the displacement measuring system (44), the upper tong (16) is moved into a position in which a maximum torque can be exerted before starting to loosen the connection of the two drill pipe elements (12).

7. A computer program comprising program code as a means for performing all the steps of any one of claims 1 to 6 when the computer program is executed on a control unit (48) of a tong system (10) intended for connecting a drill pipe element (12) to a stationary drill pipe element (12).

8. Tong system (10) for connecting a drill pipe element (12) to a stationary drill pipe element (12),
whereby the tong system (10) comprises a lower tong (14) and an upper tong (16) rotatable relative to the lower tong (14) by means of a drive unit (18),
whereby the drive unit (18) is connected to the lower tong (14) non-rotating on one side and engages on the upper tong (16) by means of a piston rod (20) in order to rotate the latter,
whereby the piston rod (20) can be retracted or extend-ed by means of the drive unit (18) to change the position (46) of the upper tong (16) relative to the lower tong (14),
whereby the tong system (10) comprises a displacement measuring system (44) and a control unit (48),
whereby the displacement measuring system (44) is intended and set up to detect a position (46) of the upper tong (16) relative to the lower tong (14) during operation of the tong system (10), and
whereby a position (46) of the upper tong (16) relative to the lower tong (14) can be detected by means of the displacement measuring system (44) during operation of the tong system (10),
**characterised in**
**that** the displacement measuring system (44) is intended and set up to determine the position (46) of the upper tong (16) relative to the lower tong (14) during operation of the tong system (10) in the form of an extended length of the piston rod (20) detected by means of the displacement measuring system (44), and
**that** the position (46) of the upper tong (16) relative to the lower tong (14) during operation of the tong system (10) can be detected in the form of an extended length of the piston rod (20) detected by means of the displacement measuring system (44),
**that** the control unit (48) is intended and set up for continuously or regularly determining, as a function of the position (46) of the upper tong (16) relative to the lower tong (14), a tightening torque acting during operation of the tong system (10) when connecting the two drill pipe ele-ments (12), and
**that** the control unit (48) can be used to continuously or regularly determine, as a function of the position (46) of the upper tong (16) relative to the lower tong (14), a tightening torque acting during operation of the tong system (10) when connecting the two drill pipe elements (12),
whereby the control unit (48) is intended and set up to compare the tightening torque with a predetermined or predeterminable target tightening torque (54) during operation of the tong system (10), and
whereby during operation of the tong system (10) by means of the control unit (48), the tightening torque can be compared with a predetermined or predeterminable target tightening torque (54), and
whereby the control unit (48) is intended and set up to terminate the connection of the two drill pipe elements (12) during operation of the tong system (10) when the detected tightening torque reaches or exceeds the target tightening torque (54), and
whereby during operation of the tong system (10), the connection of the two drill pipe elements (12) can be terminated by means of the control unit (48) when the detected tightening torque reaches or exceeds the target tightening torque (54).

9. Tong system (10) according to claim 8, whereby a computer program according to claim 7 is loaded into a memory of the control unit (48) as a control program.

10. Drilling rig with a tong system (10) according to one of claims 8 or 9.

## Revendications

1. Procédé d'exploitation d'un système de pinces (10) destiné à relier un élément de tige de forage (12) à un élément de tige de forage fixe (12),
le système de pinces (10) comprenant une pince inférieure (14) et une pince supérieure (16) pouvant tourner par rapport à la pince inférieure (14) au moyen d'une unité d'entraînement (18),
l'unité d'entraînement (18) étant reliée d'un côté de manière fixe en rotation à la pince inférieure (14) et s'engageant sur la pince supérieure (16) au moyen d'une tige de piston (20) pour faire tourner cette dernière,
la tige de piston (20) étant rentrée ou sortie au moyen de l'unité d'entraînement (18) pour modifier une position (46) de la pince supérieure (16) par rapport à la pince inférieure (14),
une position (46) de la pince supérieure (16) par rapport à la pince inférieure (14) pouvant être détectée au moyen d'un système de mesure de déplacement (44) et étant détectée en fonctionnement,
**caractérisé en ce que**
la position (46) de la pince supérieure (16) par rapport à la pince inférieure (14) est détectée sous la forme d'une longueur déployée de la tige de piston (20) détectée au moyen du système de mesure de déplacement (44),
au moyen d'une unité de commande (48), un couple de serrage déterminé en fonction de la position (46) détectée est comparé en continu ou régulièrement à un couple de serrage de consigne (54) prédéterminé ou pouvant être prédéterminé
et
l'assemblage des deux éléments de tige de forage (12) est terminé lorsque le couple de serrage déterminé atteint ou dépasse le couple de serrage de consigne (54).

2. Procédé selon la revendication 1,
dans lequel le couple de serrage est déterminé automatiquement au moyen de l'unité de commande (48) en fonction de la position (46) détectée et en fonction d'une mesure (50) enregistrée par rapport à l'unité d'entraînement (18) destinée à faire tourner la pince supérieure (16) pour une force exercée par l'unité d'entraînement (18).

3. Procédé selon la revendication 2, dans lequel, pour un vérin hydraulique (18) faisant office d'unité d'entraînement (18), une pression agissant dans le vérin hydraulique (18) lors de la rotation de la pince supérieure (16) est détectée au moyen d'un capteur de pression (60) associé au vérin hydraulique (18).

4. Procédé selon l'une quelconque des revendications précédentes,
dans lequel la pince supérieure (16) est mise en rotation à une vitesse initiale au début de l'assemblage des deux éléments de tige de forage (12) et la vitesse à laquelle la pince supérieure (16) tourne est réduite en fonction d'un couple antagoniste qui s'accumule lors de l'assemblage des deux éléments de tige de forage (12).

5. Procédé selon la revendication 4, dans lequel la pression agissant dans le vérin hydraulique (18) lors de la rotation de la pince supérieure (16) est utilisée comme mesure du couple antagoniste qui s'établit lors de l'assemblage des deux éléments de tige de forage (12).

6. Procédé selon l'une quelconque des revendications précédentes ainsi que pour le fonctionnement du système de pinces (10) pour détacher un élément de tige de forage (12) d'un élément de tige de forage fixe (12),
dans lequel, à l'aide d'une position respective (46) de la pince supérieure (16) par rapport à la pince inférieure (14), détectée par le système de mesure de déplacement (44), la pince supérieure (16) est déplacée, avant le début de la libération de la liaison des deux éléments de tige de forage (12), dans une position dans laquelle un couple maximal peut être exercé.

7. Programme informatique comprenant des moyens de code de programmation pour exécuter toutes les étapes de l'une quelconque des revendications 1 à 6, lorsque le programme informatique est exécuté sur une unité de commande (48) d'un système de pinces (10) destiné à relier un élément de tige de forage (12) à un élément de tige de forage fixe (12).

8. Système de pinces (10) pour relier un élément de tige de forage (12) à un élément de tige de forage fixe (12),
le système de pinces (10) comprenant une pince inférieure (14) et une pince supérieure (16) pouvant tourner par rapport à la pince inférieure (14) au moyen d'une unité d'entraînement (18),
l'unité d'entraînement (18) étant reliée d'un côté de manière fixe en rotation à la pince inférieure (14) et s'engageant sur la pince supérieure (16) au moyen d'une tige de piston (20) pour faire tourner cette dernière,
la tige de piston (20) pouvant être rentrée ou sortie au moyen de l'unité d'entraînement (18) pour modifier la position (46) de la pince supérieure (16) par rapport à la pince inférieure (14),
le système de pince (10) comprenant un système de mesure de déplacement (44) et une unité de commande (48),
le système de mesure de déplacement (44) étant destiné et aménagé pour détecter, lors du fonctionnement du système de pince (10), une position (46) de la pince supérieure (16) par rapport à la pince inférieure (14) et
une position (46) de la pince supérieure (16) par rapport à la pince inférieure (14) pouvant être détectée au moyen du système de mesure de déplacement (44) lors du fonctionnement du système de pince (10),
**caractérisé en ce que**
le système de mesure de déplacement (44) est destiné et aménagé pour déterminer, lors du fonctionnement du système de pince (10), la position (46) de la pince supérieure (16) par rapport à la pince inférieure (14) sous la forme d'une longueur déployée de la tige de piston (20) détectée au moyen du système de mesure de déplacement (44) et
la position (46) de la pince supérieure (16) par rapport à la pince inférieure (14) peut être détectée lors du fonctionnement du système de pince (10) sous la forme d'une longueur déployée de la tige de piston (20) détectée au moyen du système de mesure de déplacement (44),
l'unité de commande (48) est destinée et aménagée pour déterminer en continu ou régulièrement, en fonction de la position (46) de la pince supérieure (16) par rapport à la pince inférieure (14), un couple de serrage agissant lors du fonctionnement du système de pinces (10) lors de la liaison des deux éléments de tige de forage (12) et
il est possible, au moyen de l'unité de commande (48), de déterminer en continu ou régulièrement, en fonction de la position (46) de la pince supérieure (16) par rapport à la pince inférieure (14), un couple de serrage agissant lors du fonctionnement du système de pinces (10) lors de la liaison des deux éléments de tige de forage (12),
l'unité de commande (48) est destinée et aménagée pour comparer, lors du fonctionnement du système de pinces (10), le couple de serrage avec un couple de serrage de consigne (54) prédéterminé ou pouvant être prédéterminé et
lors du fonctionnement du système de pince (10) au moyen de l'unité de commande (48), le couple de serrage peut être comparé à un couple de serrage de consigne (54) prédéterminé ou pouvant être prédéterminé et
l'unité de commande (48) est destinée et aménagée pour mettre fin, lors du fonctionnement du système de pinces (10), à la liaison des deux éléments de tige de forage (12) lorsque le couple de serrage déterminé atteint ou dépasse le couple de serrage de consigne (54) et
lors du fonctionnement du système de pinces (10), la liaison des deux éléments de tige de forage (12) peut être interrompue au moyen de l'unité de commande (48) lorsque le couple de serrage déterminé atteint ou dépasse le couple de serrage de consigne (54).

9. Système de pinces (10) selon la revendication 8, dans lequel un programme informatique selon la revendication 7 est chargé dans une mémoire de l'unité de commande (48) en tant que programme de commande.

10. Installation de forage comprenant un système de pinces (10) selon l'une des revendications 8 ou 9.
